# DEMANDE DE BREVET EUROPEEN

(11) **EP 4 435 656 A1**
(43) Date de publication de la demande: **25.09.2024**
(21) Numéro de dépôt: 24163553.1
(22) Date de dépôt: 14.03.2024
(51) Int. Cl.: G06F 21/71, G06F 21/75, G06F 21/78

(54) **SYSTÈME SUR PUCE COMPORTANT DES MOYENS D'ISOLATION DES RESSOURCES ET DE CONTRE-MESURE, ET PROCÉDÉ CORRESPONDANT**

(30) Priorité: 24.03.2023 FR 2302838
(71) Demandeur: STMicroelectronics International N.V., 1228 Plan-les-Ouates, Geneva (CH)
(72) Inventeur: PALLARDY, Loic, 72700 Rouillon (FR)
(74) Mandataire: Casalonga

(57) **Abrégé**

Le système sur puce (SOC) comporte au moins une ressource esclave (RES), un système d'isolation des ressources (RIF), et un moyen de contre-mesure (TAMP) apte et destiné à limiter le fonctionnement du système (SOC) contre de potentielles anomalies, et, pour ladite au moins une ressource esclave (RES), un circuit de protection (RISUP) configuré pour bloquer ou transmettre des transactions adressées à la ressource (RES) en fonction de droits d'accès de la ressource et de la transaction. Le circuit de protection (RISUP) est configuré pour générer et communiquer directement un signal d'alerte (TAMP_SGNL) au moyen de contre-mesure (TAMP) en cas de blocage d'une transaction.

## Description

Des modes de mise en oeuvre et de réalisation de l'invention concernent les circuits intégrés, notamment les systèmes sur puce (« System on Chip » en anglais), par exemple un microcontrôleur ou un microprocesseur, et plus particulièrement les techniques d'isolation des ressources appartenant au système sur puce.

Afin de contribuer à garantir la fiabilité d'un système sur puce, des techniques d'isolation des ressources permettent de restreindre l'accès d'un ou de plusieurs dispositifs maîtres à des ressources esclaves spécifiques. On parle d'un accès « illégal » lorsqu'une transaction, émise par un dispositif maître vers une ressource esclave, n'est pas conforme aux restrictions d'accès établies.

Par exemple, la publication FR 3103586 A1 (28/05/2021) décrit une technique de gestion de ces restrictions d'accès simple à mettre en oeuvre et à implémenter, en particulier lorsque cette gestion est dynamique, c'est-à-dire qu'elle dépend de différentes applications du système sur puce.

Dans les techniques d'isolation des ressources conventionnelles, typiquement seul un « domaine de confiance » mis en oeuvre de façon logicielle notamment pour la gestion des restrictions et des droits d'accès, est informé d'un accès illégal à une ressource, par un mécanisme de gestion des accès illégaux.

En outre, des moyens de contre-mesure peuvent classiquement être prévus pour limiter le fonctionnement du système sur puce contre de potentielles anomalies, par exemple en restreignant les accès à toutes ou certaines des ressources seulement à un environnement de confiance sécurisé. Les anomalies peuvent correspondre à une violation des règles d'isolations des ressources, pouvant être causées par une attaque visant à une récupération de données sensibles ou secrète, et dans le cadre d'une ingénierie inversée.

Or, il est de la responsabilité du domaine de confiance de générer un signal d'alerte commandant la fonctionnalité des moyens de contre-mesure si un accès illégal est identifié comme une anomalie ou comme une attaque potentielle.

Lors du traitement logiciel de décision mis en oeuvre pour générer le signal d'alerte, des secrets ne sont pas bloqués pendant plusieurs cycles d'horloge. En outre, une accumulation d'interruptions du domaine de confiance, causée par des accès illégaux multiples, pourrait créer un déni de services au niveau du domaine de confiance, et retarder ledit traitement logiciel.

Ainsi, il existe un besoin d'améliorer les mécanismes de protections contre les accès illégaux, notamment du point de vue de la mise en oeuvre des actions et moyens de contre-mesure.

A cet égard, des modes de réalisation et de mise en oeuvre prévoient de générer directement le signal d'alerte commandant les moyens de contre-mesure, depuis la ressource qui a reçu un accès illégal, sans passer par le traitement logiciel de décision.

En outre, des modes de réalisation et de mise en oeuvre prévoient de pouvoir sélectionner le comportement pour chaque ressource afin de décider si un accès illégal doit être silencieux ou causer la génération du signal d'alerte.

Selon un aspect, il est ainsi proposé un système sur puce comportant au moins une ressource esclave, un système d'isolation des ressources, et un moyen de contre-mesure apte et destiné à limiter le fonctionnement du système contre de potentielles anomalies, et, pour ladite au moins une ressource esclave, un circuit de protection configuré pour bloquer ou transmettre des transactions adressées à la ressource en fonction de droits d'accès de la ressource et de la transaction, le circuit de protection étant configuré pour générer et communiquer directement un signal d'alerte au moyen de contre-mesure en cas de blocage d'une transaction.

Le système sur puce peut typiquement comporter au moins un dispositif maître apte à générer les transactions adressées à la ressource, par exemple via un bus d'interconnexion.

On notera en particulier que c'est le circuit de protection associé à sa ressource respective (et qui est également parfois appelé « pare-feu », ou « firewall » en anglais) qui est à l'origine de la génération du signal d'alerte. La commande de l'action prise par les moyens de contre-mesure est ainsi directement communiquée, ce qui améliore la réactivité et la fiabilité du mécanisme de contre-mesure.

Selon un mode de réalisation, le système sur puce comporte un canal d'alerte connectant directement le circuit de protection avec le moyen de contre-mesure et dédié à la transmission dudit signal d'alerte.

En d'autres termes, le signal d'alerte peut être communiqué directement et sans intermédiaire via le canal d'alerte, et n'étant pas soumis à une mise en oeuvre logicielle la fiabilité est ainsi améliorée.

Selon un mode de réalisation, le système sur puce comporte une pluralité de ladite au moins une ressource, et un élément multiplexeur configuré pour regrouper tous les canaux d'alerte connectés auxdits circuits de protection respectifs, sur un seul canal d'alerte sortant et directement connecté au moyen de contre-mesure.

Par exemple, l'élément multiplexeur a une fonction de transmission des signaux d'alerte, indistinctement de leurs provenances, du type « porte OU ».

Selon un mode de réalisation, le système d'isolation des ressources comporte, dans un jeu de registres de configuration, pour chaque ressource un emplacement pour contenir une donnée de paramétrage des alertes, le circuit de protection de chaque ressource étant configuré pour générer ou non ledit signal d'alerte en cas de blocage d'une transaction adressée à la ressource, en fonction de la donnée de paramétrage des alertes pour cette ressource.

Ainsi, la commande de l'action prise par les moyens de contre-mesure peut être activé ou désactivé en fonction de chaque ressource. En effet, une ressource peut être considérée critique ou non, en fonction de l'utilisation qui est faite du système sur puce. Ainsi il peut être souhaitable ou non d'activer le signal d'alerte en cas de blocage d'une transaction pour une ressource donnée.

Selon un mode de réalisation, le système sur puce comporte en outre au moins un dispositif maître apte à générer lesdites transactions adressées à la ressource, les transactions comprenant une donnée d'identification du maître, et le système d'isolation des ressources comporte, dans un jeu de registres de configuration, pour chaque dispositif maître, un emplacement pour contenir une deuxième donnée de paramétrage des alertes, le circuit de protection de chaque ressource étant configuré pour générer ou non ledit signal d'alerte en cas de blocage d'une transaction adressée à la ressource par le dispositif maître, en fonction de la deuxième donnée de paramétrage des alertes pour ce dispositif maître.

Ainsi, la commande de l'action prise par les moyens de contre-mesure peut être activé ou désactivé en fonction de chaque dispositif maître. En effet, on peut considérer qu'un environnement de confiance, par exemple la mise en oeuvre d'un micrologiciel (usuellement « firmware » en anglais) d'un dispositif maître « de confiance », ne peut pas générer d'accès illégal. Une détection d'un accès illégal en provenance d'un tel environnement pourra donc systématiquement être traité comme une attaque par le moyen de contre-mesure.

Selon un autre aspect, il est également proposé un procédé de gestion de l'isolation de ressources d'un système sur puce, dans lequel :
- le système sur puce comprend au moins une ressource esclave, un système d'isolation des ressources, et un moyen de contre-mesure apte et destiné à limiter le fonctionnement du système contre de potentielles anomalies ; et
- le procédé comprend, pour chaque ressource, une mise en oeuvre d'une protection comprenant un blocage ou une transmission de transactions adressées à la ressource, en fonction de droits d'accès de la ressource et de la transaction, et une génération d'un signal d'alerte directement communiqué au moyen de contre-mesure en cas de blocage d'une transaction.

Selon un mode de mise en oeuvre, le signal d'alerte est transmis sur un canal d'alerte dédié, connectant directement le circuit de protection avec le moyen de contre-mesure.

Selon un mode de mise en oeuvre, le système sur puce comporte une pluralité de ladite au moins une ressource, et tous les canaux d'alerte connectés auxdits circuits de protection respectifs sont regroupés sur un seul canal d'alerte sortant et directement connecté au moyen de contre-mesure.

Selon un mode de mise en oeuvre, une donnée de paramétrage des alertes, pour chaque ressource, est contenue dans un jeu de registres de configuration, et ledit signal d'alerte est généré ou non en cas de blocage d'une transaction adressée à une ressource, en fonction de la donnée de paramétrage des alertes pour cette ressource.

Selon un mode de mise en oeuvre, dans lequel le système sur puce comporte en outre au moins un dispositif maître générant lesdites transactions adressées à la ressource comprenant une donnée d'identification du maître, une deuxième donnée de paramétrage des alertes, pour chaque dispositif maître, est contenue dans un jeu de registres de configuration, et ledit signal d'alerte est généré ou non en cas de blocage d'une transaction adressée à une ressource par le dispositif maître, en fonction de la deuxième donnée de paramétrage des alertes pour ce dispositif maître.

D'autres avantages et caractéristiques de l'invention apparaîtront à l'examen de la description détaillée de modes de réalisation et de mise en oeuvre, nullement limitatifs, et des dessins annexés, sur lesquels les figures :
[Fig 1] et
[Fig 2] et
[Fig 3] et
[Fig 4] illustrent des modes de réalisation et de mise en oeuvre de l'invention.

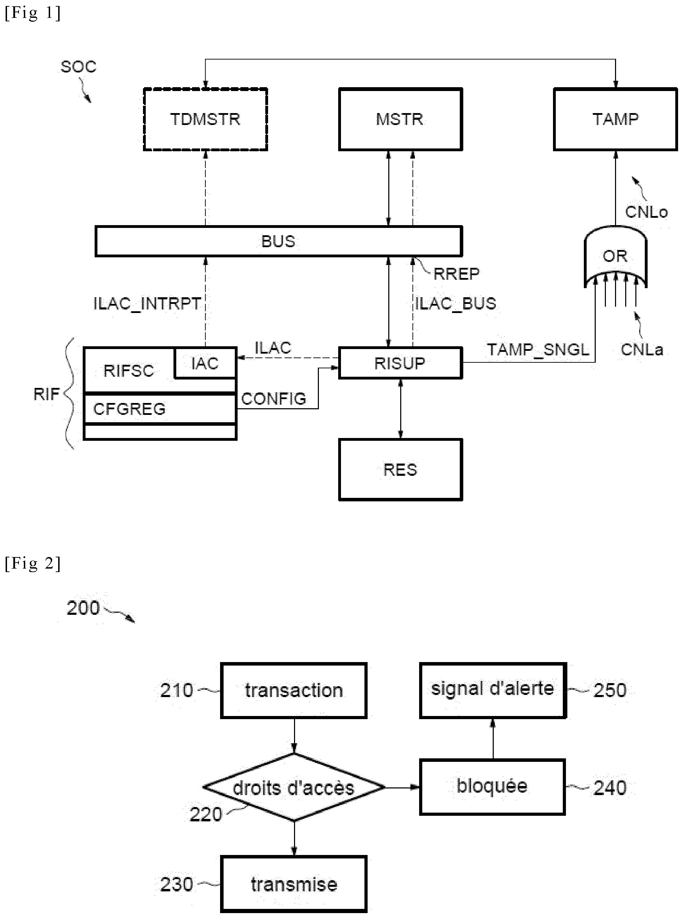

La figure 1 illustre schématiquement un exemple de réalisation d'un système sur puce SOC, tel que par exemple un microcontrôleur ou un microprocesseur, comportant au moins un dispositif maître MSTR, et au moins une ressource esclave RES pouvant communiquer via un bus d'interconnexion BUS.

Les dispositifs maîtres TDMSTR, MSTR peuvent par exemple être des processeurs ou des unités centrales de calculs « CPU » (pour « Central Processing Unit » en anglais), adaptés pour mettre en oeuvre des fonctionnalités logicielles ; ou bien d'autres dispositifs maîtres tels que des moyens d'accès direct en mémoire « DMA » (pour « Direct Memory Access » en anglais).

Dans cet exemple, le système sur puce SOC comporte en outre un dispositif maître TDMSTR qualifié « de confiance », typiquement en charge de la configuration et de la gestion de droits d'accès définissant les règles d'isolation, mises en place par un système d'isolation des ressources RIF décrit plus en détails ci-après.

Les ressources peuvent par exemple comprendre un périphérique du type I2C (pour « Inter Integrated Circuit » en anglais), du type SPI (pour « Serial Peripheral Interface » en anglais), du type UART (pour « Universal Asynchronous Receiver Transmitter » en anglais), du type horloge temps réel « RTC » (pour « Real Time Clock » en anglais), ou bien du type mémoire tel qu'une mémoire interne au système sur puce ou une interface pour mémoire externe au système sur puce.

Le bus d'interconnexion BUS est couplé entre les dispositifs maîtres et les ressources esclaves et permet de router des transactions, par exemple des transactions d'écriture ou de lecture, et plus généralement des informations, sur des canaux pouvant avoir des fonctionnalités dédiées, entre les dispositifs maîtres MSTR et les ressources esclaves RES.

Le bus d'interconnexion peut par exemple être un bus du type « AXI » pour « Advanced eXtensible Interface » en anglais, ou du type « AHB » pour « Advanced High-performance Bus » en anglais, qui sont des types de bus de microcontrôleur « AMBA » pour « Advanced Microcontroller Bus Architecture ».

Dans un cas particulier, le bus d'interconnexion BUS peut comporter un canal de notification d'erreur RREP, par exemple prévu pour communiquer une information de réponse à une transaction par les ressources esclaves.

Le système sur puce SOC comporte en outre un système d'isolation des ressources RIF configuré pour restreindre l'accès d'un ou de plusieurs dispositifs maîtres à des ressources esclaves spécifiques, notamment en fonction de droits d'accès définis à cet égard.

Par exemple, parmi les droits d'accès pouvant définir les règles d'isolation des ressources, on peut prévoir de définir des environnements privilégié et non-privilégié, et éventuellement cumulativement des environnements sécurisé et non-sécurisé, ainsi qu'éventuellement en outre un identifiant de compartimentation.

Les notions d'environnements et droits d'accès sécurisé/non-sécurisé et privilégié/non-privilégié sont bien connues de l'homme du métier, et la notion identifiant de compartimentation est notamment enseignée dans la publication FR 3103586 A1 (28/05/2021).

On parle d'un accès « illégal » lorsque les droits d'accès d'une transaction ne sont pas conformes à ceux de la ressource destinataire.

Par exemple, le système d'isolation des ressources RIF du système sur puce peut s'inscrire dans la technique d'isolation des ressources décrite dans la publication FR 3103586 A1 (28/05/2021).

Le système d'isolation des ressources RIF comporte en particulier pour chaque ressource RES, un circuit de protection RISUP (parfois appelé « pare-feu »), configuré pour bloquer ou transmettre des transactions adressées à la ressource RES par le bus d'interconnexion BUS, en fonction desdits droits d'accès de la ressource et de la transaction.

Par ailleurs, le système sur puce SOC comporte un moyen de contre-mesure TAMP apte et destiné à limiter le fonctionnement du système sur puce SOC contre de potentielles anomalies.

Les anomalies peuvent correspondre à une violation des règles d'isolations des ressources, pouvant être causées par une attaque visant à une récupération de données sensibles ou secrète, par exemple dans le cadre d'une ingénierie inversée ou d'un piratage.

Par exemple, un tel moyen de contre-mesure TAMP peut être réalisé sous la forme d'un circuit matériel qui peut en un cycle d'horloge déconnecter les ressources critiques (et qui bénéficient de la protection) du reste du système, de manière permanente ou temporaire.

Par exemple, le moyen de contre-mesure TAMP peut être capable de « geler » la ressource dans le système, c'est-à-dire de restreindre tous les (ou certains des) accès vers les ressources protégées seulement à un environnement de confiance sécurisé, c'est-à-dire par exemple seulement au dispositif maître de confiance TDMSTR, voire empêcher strictement tous les accès vers lesdites ressources. Le moyen de contre-mesure TAMP peut aussi effacer le contenu de certains registres sensibles, et est capable à cet égard de réinitialiser les registres.

Les mise en pratique sont diverses en fonction de la ressource à protéger, et peuvent par exemple inclure une génération d'un signal de type « reset » (signal de réinitialisation) ; ou une isolation de la ressource en la déconnectant de du bus d'interconnexions.

D'autre part, par exemple en fonction d'une décision prise par le dispositif maître de confiance TDMSTR, le moyen de contre-mesure TAMP peut être configuré pour éventuellement relâcher la restriction, ou effectuer d'autres actions pour empêcher l'anomalie de subsister, par exemple une désactivation d'une fonctionnalité identifiée, un redémarrage complet du système sur puce, un effacement de données en mémoires, voire une destruction du système sur puce SOC.

En outre, selon une caractéristique générale de la présente description, le circuit de protection RISUP est configuré pour générer et communiquer directement un signal d'alerte T AMP _SGNL au moyen de contre-mesure TAMP en cas de blocage d'une transaction. Le signal d'alerte TAMP_SGNL peut par exemple être adapté pour commander une action du moyen de contre-mesure TAMP, par exemple telle que présentée ci-avant pour geler le système sur puce SOC ou pour empêcher l'anomalie de subsister.

On se réfère à cet égard à la figure 2.

La figure 2 illustre le procédé 200 mis en oeuvre par le circuit de protection RISUP, dans la gestion de l'isolation de ressource RIF du système sur puce SOC décrit en relation avec la figure 1.

Ainsi, la mise en oeuvre de la protection 200 de chaque ressource, comprend, à la réception 210 d'une transaction en provenance du bus d'interconnexion BUS, une vérification 220 des droits d'accès de cette transaction vis-à-vis des droits d'accès de la ressource.

En fonction de la vérification 220, la transaction 210 peut être transmise 230 à la ressource RES en aval, ou bien bloquée 240 par le circuit de protection RISUP en amont.

Et, si la transaction est bloquée 240, le signal d'alerte TAMP_SNGL est généré 250 par le circuit de protection RISUP, et directement transmis au moyen de contre-mesure TAMP.

On se réfère de nouveau à la figure 1.

Le signal d'alerte TAMP_SGNL est avantageusement communiqué via un canal d'alerte CNLa connecté directement du circuit de protection RISUP au moyen de contre-mesure TAMP et dédié à la transmission dudit signal d'alerte TAMP_SGNL.

En d'autres termes, le signal d'alerte peut être communiqué directement et sans intermédiaire via le canal d'alerte, et n'étant pas soumise à une mise en oeuvre logicielle la fiabilité de la communication est améliorée.

Le système sur puce SOC comporte de manière usuelle une grande pluralité de ressources RES, par exemple plusieurs dizaines, et plusieurs de ces ressources RES (dans l'absolu, toutes les ressources) peuvent bénéficier de la communication directe du signal d'alerte TAMP_SGNL par les circuits de protections respectifs RISUP.

Ainsi, un élément multiplexeur OR est configuré pour regrouper tous les canaux d'alerte CNLa respectivement connectés auxdits circuits de protection respectifs RISUP, vers un seul canal d'alerte sortant CNLo et directement connecté au moyen de contre-mesure TAMP. Par exemple, l'élément multiplexeur a une fonction de transmission des signaux d'alerte, indistinctement de leurs provenances CNLa, du type « porte OU ».

En outre, avantageusement, le canal d'alerte CNLa est matériellement distinct du bus d'interconnexion BUS sur lequel sont communiquées les transactions adressées à la ressource RES. Là encore, cela permet de communiquer le signal d'alerte directement et sans intermédiaire, notamment sans utiliser le protocole du bus d'interconnexion BUS, ni un adressage, etc, améliorant la réactivité et la fiabilité de la communication du signal d'alerte.

Parallèlement à la communication du signal d'alerte TAMP_SGNL décrite ci-avant, le système d'isolation des ressources RIF peut également être configuré pour générer un signal d'interruption ILAC_INTRPT adressé au dispositif maître de confiance TDMSTR, par exemple via le mécanisme de routage du bus d'interconnexion BUS, en cas de blocage d'une transaction par l'un quelconque des circuits de protection RISUP des périphériques (au moins un) du système sur puce SOC.

Le système d'isolation des ressources RIF peut à cet égard comporter une unité de gestion centrale des accès illégaux IAC, par exemple au sein d'un dispositif de commande du système d'isolation des ressources RIFSC.

Dans ce cas, les circuits de protection RISUP des ressources RES sont configurés pour générer un signal de détection d'un accès illégal ILAC (et/ou du blocage de la transaction correspondante) et le communiquer à l'unité de gestion centrale des accès illégaux IAC.

L'unité de gestion centrale des accès illégaux IAC est quant à elle configurée pour générer l'interruption ILAC_INTRPT adressée au dispositif maître de confiance TDMSTR, en cas de réception d'un signal de détection d'accès illégal ILAC communiqué par l'un quelconque des circuits de protection RISUP.

En outre, le circuit de protection RISUP peut être capable de générer un signal de notification ILAC_BUS adressé au dispositif maître MSTR à l'origine de ladite transaction bloquée, par les mécanismes de routage du bus, et avantageusement sur un canal de notification d'erreur RREP du bus d'interconnexion BUS.

On notera que le canal de notification d'erreur RREP du bus peut normalement être prévu pour être utilisé par la ressource RES, et non par le circuit de protection RISUP lui-même, par exemple pour communiquer une information de réponse des ressources esclaves, suite à une réception d'une transaction en lecture ou en écriture, telle qu'une notification d'erreur en cas de transaction reçue avec succès mais qui n'est pas comprise par la ressource esclave.

Ainsi, le canal de notification d'erreur du bus RREP est potentiellement « surchargé » puisqu'il est connecté et utilisable indépendamment par deux circuits distincts, à la fois par le circuit de protection RISUP et par la ressource RES.

Par ailleurs, le signal de notification ILAC_BUS peut être prévu pour engendrer une réaction, avantageusement immédiate, du dispositif maître MSTR à l'origine de la transaction bloquée.

La réaction du dispositif maître MSTR à la réception du signal de notification ILAC_BUS peut comprendre une interruption du transfert de donnée en cours, et/ou un arrêt de processus en cours (à l'origine de l'accès illégal) en forçant une génération d'exception d'abandon de données permettant d'identifier l'adresse qui a généré l'accès illégal.

Enfin, le système d'isolation des ressources RIF peut avantageusement comporter des registres de configuration CFGREG, par exemple au sein du dispositif de commande du système d'isolation des ressources RIFSC, aptes à contenir des informations de configuration CONFIG des éléments du système d'isolation des ressources RIF (notamment les circuits de protection RISUP des ressources RES et aussi des dispositifs maîtres MSTR, TDMSTR).

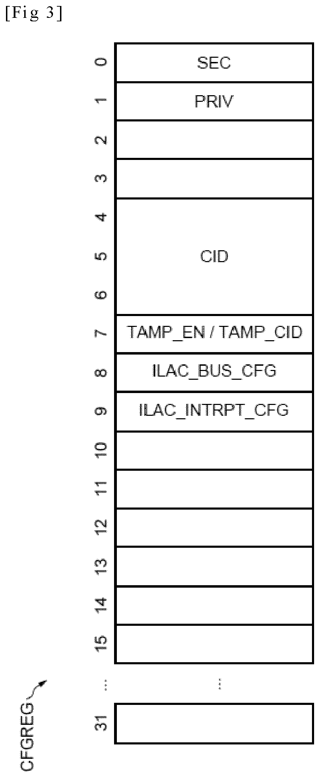

On se réfère à cet égard à la figure 3

La figure 3 illustre un exemple d'un registre de configuration CFGREG, par exemple dédié à une ressource RES du système sur puce SOC.

Le registre de configuration CFGREG contient 32 emplacements « 0 » à « 31 » pour contenir des données de paramétrage relative à l'isolation des ressources, pour la ressource RES respective.

Par exemple et arbitrairement, l'emplacement « 0 » peut permettre de définir le droit d'accès SEC sécurisé ou non-sécurisé de la ressource, tandis que l'emplacement « 1 » peut permettre de définir le droit d'accès PRIV privilégié ou non-privilégié de la ressource.

Par exemple également, les emplacements « 4 » à « 6 » peuvent permettre de contenir l'identifiant de compartimentation CID de la ressource.

Dans un exemple de réalisation avantageux du système d'isolation des ressources RIF, le registre de configuration CFGREG de chaque ressource RES comporte un emplacement « 7 » prévu pour contenir une donnée de paramétrage des alertes TAMP_EN.

La donnée de paramétrage des alertes TAMP_EN permet d'activer ou désactiver (par exemple lorsqu'elle est enregistrée à la valeur « 1 », ou respectivement « 0 ») la fonctionnalité de génération et de communication directe du signal d'alerte T AMP _SGNL au moyen de contre-mesure TAMP, par le circuit de protection RISUP qui bloque une transaction.

La valeur de la donnée de paramétrage des alertes TAMP_EN peut par exemple être enregistrée par un utilisateur, afin de choisir le degré de protection contre les accès illégaux dont il souhaite bénéficier pour chaque ressource RES du système sur puce SOC.

La valeur de la donnée de paramétrage des alertes TAMP_EN peut aussi par exemple être enregistrée par une procédure d'établissement des droits d'accès, usuellement effectuée par le dispositif maître de confiance TDMSTR au démarrage du système sur puce SOC.

Ainsi, le fonctionnement du circuit de protection RISUP de chaque ressource RES est configuré en fonction de la donnée de paramétrage des alertes TAMP_EN contenue dans un emplacement (par exemple l'emplacement « 7 ») du registre de configuration CFGREG dédié à cette ressource RES.

Dans une autre possibilité, le registre de configuration CFGREG peut être dédié à un dispositif maître MSTR du système sur puce SOC.

Dans ce cas, l'emplacement respectif, par exemple l'emplacement « 7 », contient une deuxième donnée de paramétrage des alertes TAMP CID.

La deuxième donnée de paramétrage des alertes TAMP_CID permet d'activer ou désactiver (par exemple lorsqu'enregistrée à « 1 » ou respectivement « 0 ») la fonctionnalité de génération et de communication directe du signal d'alerte TAMP_SGNL au moyen de contre-mesure TAMP, par le circuit de protection RISUP qui bloque la transaction émise par le dispositif maître MSTR associé à ce registre de configuration CFGREG.

En d'autres termes, le circuit de protection RISUP de chaque ressource RES est configuré pour générer ou non ledit signal d'alerte TAMP_SGNL en cas de blocage d'une transaction adressée à la ressource par le dispositif maître MSTR, en fonction de la deuxième donnée de paramétrage des alertes TAMP_CID pour ce dispositif maître.

Par exemple en pratique, le circuit de protection RISUP de chaque ressource RES peut connaître quel est le dispositif maître qui a émis la transaction au moyen d'une donnée d'identification de maître incorporée dans la transaction, par exemple l'identifiant de compartimentation CID.

Ainsi, selon deux possibilités qui sont compatibles et peuvent être cumulées, un utilisateur peut choisir de générer le signal d'alerte TAMP_SGNL si on détecte un accès illégal sur une ressource donnée (avec la donnée de paramétrage des alertes TAMP_EN), et/ou si on détecte un accès illégal effectué par un maître donné (avec la deuxième donnée de paramétrage des alertes TAMP_CID).

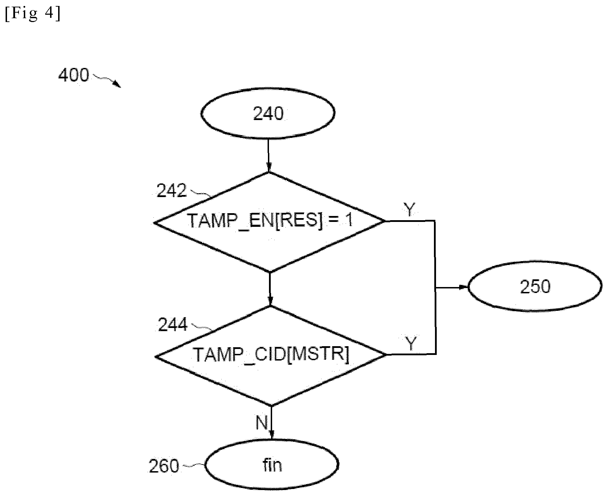

On se réfère à cet égard à la figure 4.

La figure 4 illustre un exemple de mise en oeuvre d'une décision 400 par un circuit de protection RISUP, en cas de blocage d'une transaction 240 (tel que décrit en relation avec la figure 2), pour générer ou non le signal d'alerte 250 (tel que décrit en relation avec la figure 2) en fonction desdites données de paramétrage des alertes TAMP_EN, TAMP_CID contenues dans le jeu de registres de configuration CFGREG.

On vérifie, dans une étape 242, si la ressource RES a qui est adressée la transaction bloquée bénéficie de la protection des moyens de contre-mesure TAMP, par la donnée de paramétrage des alertes associée à cette ressource TAMP_EN[RES]. Le circuit de protection RISUP peut accéder à cette donnée contenue dans le registre de configuration

Si oui, « y », alors le signal d'alerte est généré 250.

Si non, « n », alors on vérifie, dans une étape 244, si le dispositif maître MSTR qui a émis la transaction bloquée bénéficie de la protection des moyens de contre-mesure TAMP, par la deuxième donnée de paramétrage des alertes associée à ce dispositif maître TAMP_CID[MSTR].

Si oui, « y », alors le signal d'alerte est généré 250.

Si non, « n », alors le signal d'alerte n'est pas généré, et la mise en oeuvre du mécanisme d'activation des moyens de contre-mesure TAMP peut prendre fin dans une étape 260.

Optionnellement, après l'étape 260, le système d'isolation des ressources peut notifier le dispositif maître MSTR ayant émis la transaction illégale, par exemple au moyen du signal de notification ILAC_BUS, ou notifier le dispositif maître de confiance TDMSTR par exemple au moyen du signal d'interruption ILAC_ INTRPT.

On se réfère de nouveau à la figure 3.

A cet égard, d'une part, dans le cas où le système d'isolation des ressources RIF est capable de générer le signal de notification ILAC_BUS tel que mentionné précédemment, le registre de configuration CFGREG dédié à chaque ressource RES peut contenir un emplacement « 8 » prévu pour contenir une donnée de paramétrage des notifications ILAC_BUS_CFG. La donnée de paramétrage des notifications ILAC_BUS_CFG permet d'activer ou désactiver la fonctionnalité de notification d'accès illégal ILAC_BUS via le canal de notification d'erreur RREP du bus d'interconnexion BUS.

D'autre part, dans le cas où le système d'isolation des ressources RIF comporte l'unité de gestion des accès illégaux centrale IAC, telle que mentionnée précédemment, le registre de configuration CFGREG dédié à chaque ressource RES peut avantageusement contenir un emplacement « 9 » prévu pour contenir une donnée de paramétrage des interruption ILAC_INTRPT_CFG. La donnée de paramétrage des interruptions ILAC_INTRPT_CFG permet d'activer ou désactiver la fonctionnalité de l'unité de gestion des accès illégaux centrale IAC générant des interruptions ILAC_INTRPT au dispositif maître de confiance TDMSTR, en cas de détection d'accès illégal, et respectivement pour chacune des ressources RES.

## Revendications

1. Système sur puce (SOC) comportant au moins une ressource esclave (RES), un système d'isolation des ressources (RIF), et un moyen de contre-mesure (TAMP) apte et destiné à limiter le fonctionnement du système (SOC) contre de potentielles anomalies, et, pour ladite au moins une ressource esclave (RES), un circuit de protection (RISUP) configuré pour bloquer ou transmettre des transactions adressées à la ressource (RES) en fonction de droits d'accès de la ressource et de la transaction, le circuit de protection (RISUP) étant configuré pour générer et communiquer directement un signal d'alerte (TAMP_SGNL) au moyen de contre-mesure (TAMP) en cas de blocage d'une transaction.

2. Système sur puce (SOC) selon la revendication 1, comportant un canal d'alerte (CNLa) connectant directement le circuit de protection (RISUP) avec le moyen de contre-mesure (TAMP) et dédié à la transmission dudit signal d'alerte (TAMP_SGNL).

3. Système sur puce selon la revendication 2, comportant une pluralité de ladite au moins une ressource (RES), et un élément multiplexeur (OR) configuré pour regrouper tous les canaux d'alerte respectivement connectés auxdits circuits de protection respectifs (RISUP), sur un seul canal d'alerte sortant et directement connecté au moyen de contre-mesure (TAMP).

4. Système sur puce selon l'une des revendications 1 à 3, dans lequel dans lequel le système d'isolation des ressources (RIF) comporte, dans un jeu de registres de configuration (CFGREG), pour chaque ressource un emplacement pour contenir une donnée de paramétrage des alertes (TAMP_EN), le circuit de protection (RISUP) de chaque ressource étant configuré pour générer ou non ledit signal d'alerte (TAMP_SGNL) en cas de blocage d'une transaction adressée à la ressource, en fonction de la donnée de paramétrage des alertes (TAMP_EN) pour cette ressource.

5. Système sur puce selon l'une des revendications 1 à 4, comportant en outre au moins un dispositif maître (MSTR) apte à générer lesdites transactions adressées à la ressource (RES) comprenant une donnée d'identification du maître (CID), dans lequel le système d'isolation des ressources (RIF) comporte, dans un jeu de registres de configuration (CFGREG), pour chaque dispositif maître, un emplacement pour contenir une deuxième donnée de paramétrage des alertes (TAMP_CID), le circuit de protection (RISUP) de chaque ressource étant configuré pour générer ou non ledit signal d'alerte (TAMP_SGNL) en cas de blocage d'une transaction adressée à la ressource par le dispositif maître (MSTR), en fonction de la deuxième donnée de paramétrage des alertes (TAMP_CID) pour ce dispositif maître.

6. Procédé de gestion de l'isolation de ressources d'un système sur puce (SOC), dans lequel :
- le système sur puce (SOC) comprend au moins une ressource esclave (RES), un système d'isolation des ressources (RIF), et un moyen de contre-mesure (TAMP) apte et destiné à limiter le fonctionnement du système (SOC) contre de potentielles anomalies ; et
- le procédé comprend, pour chaque ressource, une mise en oeuvre d'une protection (RISUP) comprenant un blocage ou une transmission de transactions adressées à la ressource (RES), en fonction de droits d'accès de la ressource et de la transaction, et une génération d'un signal d'alerte (TAMP_SGNL) directement communiqué au moyen de contre-mesure (TAMP) en cas de blocage d'une transaction.

7. Procédé selon la revendication 6, dans lequel le signal d'alerte (TAMP_SGNL) est transmis sur un canal d'alerte dédié (CNLa), connectant directement le circuit de protection (RISUP) avec le moyen de contre-mesure (TAMP).

8. Procédé selon la revendication 7, dans lequel le système sur puce comporte une pluralité de ladite au moins une ressource (RES), et tous les canaux d'alerte respectivement connectés auxdits circuits de protection respectifs (RISUP) sont regroupés (OR) sur un seul canal d'alerte sortant et directement connecté au moyen de contre-mesure (TAMP).

9. Procédé selon l'une des revendications 6 à 8, dans lequel une donnée de paramétrage des alertes (TAMP_EN), pour chaque ressource, est contenue dans un jeu de registres de configuration (CFGREG), et ledit signal d'alerte (TAMP_SGNL) est généré ou non en cas de blocage d'une transaction adressée à une ressource, en fonction de la donnée de paramétrage des alertes (TAMP_EN) pour cette ressource.

10. Procédé selon l'une des revendications 6 à 9, le système sur puce comportant en outre au moins un dispositif maître (MSTR) générant lesdites transactions adressées à la ressource (RES) comprenant une donnée d'identification du maître (CID), dans lequel une deuxième donnée de paramétrage des alertes (TAMP_CID), pour chaque dispositif maître, est contenue dans un jeu de registres de configuration (CFGREG), et ledit signal d'alerte (TAMP_SGNL) est généré ou non en cas de blocage d'une transaction adressée à une ressource par le dispositif maître (MSTR), en fonction de la deuxième donnée de paramétrage des alertes (TAMP_CID) pour ce dispositif maître.
